# EUROPÄISCHE PATENTSCHRIFT

(11) **EP 0 697 307 B1**
(45) Veröffentlichungstag und Bekanntmachung des Hinweises auf die Patenterteilung: **20.01.1999**
(21) Anmeldenummer: 95106842.8
(22) Anmeldetag: 05.05.1995
(51) Int. Cl.: B60N 2/36, B60N 2/42

(54) **Vorrichtung zum Verriegeln von geteilt klappbaren Rückenlehnen an Kraftfahrzeugrücksitzen**
Device for locking tiltable split backrests on a motor vehicle rear seat
Dispositif de verrouillage pour dossiers divisible et escamotable dans un siège arrière pour véhicules automobiles

(30) Priorität: 05.08.1994 DE 4427835
(43) Veröffentlichungstag der Anmeldung: 21.02.1996
(73) Patentinhaber: ADAM OPEL AG, 65423 Rüsselsheim (DE)
(72) Erfinder: Specht, Martin, D-82430 Feldafing (DE); Leuchtmann, Andrew, Dipl.-Ing., D-55595 Mandel (DE)

(56) Entgegenhaltungen:
- EP-A- 0 336 819
- EP-A- 0 564 962
- DE-A- 3 026 259
- DE-A- 3 211 363
- DE-A- 4 230 538
- US-A- 4 305 615
- PATENT ABSTRACTS OF JAPAN vol. 018, no. 576 (M-1697), 4.November 1994 & JP-A-06 211075 (MAZDA MOTOR CORP), 2.August 1994,

## Beschreibung

Die Erfindung betrifft eine Vorrichtung zum Verriegeln von geteilt klappbaren Rückenlehnen an Kraftfahrzeugrücksitzen nach dem Oberbegriff des Patentanspruches 1.

Eine Vorrichtung dieser Art ist in der DE-A-3 026 259 (A1) beschrieben. Bei dieser bekannten Vorrichtung ist zur Verriegelung einer nach vorn umklappbaren Rückenlehne ein mit der Rückenlehne verbundener Verriegelungshebel vorgesehen, welcher in aufrechter Stellung der Rückenlehne eine karosserieseitige Rastvorrichtung hintergreift. Um bei starken Fahrzeugverzögerungen eine Entriegelung der Rückenlehne zu vermeiden, weist die karosserieseitige Rastvorrichtung eine linear verschiebbare Masse auf, die bei Einwirkung von Trägheitskräften in eine Stellung gelangt, in der der Verriegelungshebel zusätzlich gesperrt wird. Auf diese Weise soll eine im Ruhezustand des Fahrzeuges leicht betätigbare Rückenlehnenverriegelung geschaffen werden, die bei starken Fahrzeugverzögerungen jedoch durch eine zusätzliche Verriegelung gesperrt ist.

Eine weitere Verriegelung für eine Rückenlehne ist aus der DE-A-3 211 363 (A1) bekannt. Diese Verriegelung ist für geteilte Hintersitz-Rückenlehnen vorgesehen und weist eine zusätzliche Verriegelungsvorrichtung auf, die in dem Teilungsspalt zwischen den beiden Lehnenhälften angeordnet und zur lösbaren Verriegelung dieser Lehnenhälften gegeneinander vorgesehen ist. Diese Verriegelungsvorrichtung ist aber zur gemeinsamen Betätigung mit einem üblichen, an einer Seite der Lehnenhälfte angeordneten Verriegelungsschloß bzw. -element ausgebildet.

Aufgabe der Erfindung ist es, eine derartige Vorrichtung zu schaffen, die im Falle eines Aufpralls oder starken Bremsvorgangs die Rückenlehnenteile in aufrechter Stellung (Sitzposition) hält und so ein verbesserter Schutz vor hinter den Rücksitzen untergebrachten Gegenständen, die in einem solchen Fall beschleunigt werden, erreicht wird.

Erfindungsgemäß wird diese Aufgabe durch die Merkmale des kennzeichnenden Teils des Patentanspruchs 1 gelöst.

Dabei kann der Sensor auf einen bestimmten Schwellenwert zum Ansprechen eingestellt sein. Hierfür kann die Trägheit einer Masse ausgenutzt werden, um die Zusatzarretierung direkt auszulösen.

Der Sensor kann auch einen Kraftspeicher, z.B. einen Gasgenerator, aktivieren, der das erzeugte Gas dazu verwendet, eine Zug- oder Schubmechanik zu betätigen, die die Zusatzarretierung in Verriegelungs- bzw. Haltestellung bringt oder das Gas in einen Betätigungszylinder geführt wird, in dem ein mit der Zusatzarretierung verbundener Arbeiskolben verschoben wird.

Die Zusatzarretierung kann bevorzugt im oberen Bereich der Rückenlehne angeordnet sein, um die die Rückenlehnenteile haltenden Kräfte zu erhöhen.

Dabei können verschiebbare Riegel der Zusatzarretierung form- und/oder kraftschlüssig in entsprechend ausgebildete Aufnahmen eingreifen. Hierfür kann ein oder mehrere Verriegelungsbolzen verwendet werden, die nach Auslösung durch den Sensor in Richtung auf das benachbarte Rückenlehnenteil in eine der Riegelbolzenform entsprechend ausgebildete Aufnahme des benachbarten Rückenlehnenteils bewegt wird. Der bzw. die Riegelbolzen kann als aktiver Sperriegel wirken. Im Crashfall wird hierdurch ein Verbund zwischen den geteilten Rückenlehnenteilen erreicht. Als Kraftspeicher für den Antrieb des Riegelbolzens zw. der Riegelbolzen dient eine Druckfeder, z.B. Schraubendruckfeder.

Am jeweiligen Rückenlehnenteil kann auch bevorzugt im oberen Lehnenbereich ein Zugseil befestigt sein, das mit Hilfe eines Gasgenerators spannbar ist. Dabei ist die freie Lange des Seiles so gewählt, daß ein Klappen der Rückenlehnenteile bis in die horizontale Ladestellung möglich ist. Der Spannweg der Zugseile ist so auszulegen, daß im Bedarfsfall das jeweilige Rückenlehnenteil zusätzlich mit dem Zugseil gehalten ist. Der Gasgenerator kann in diesem Fall am Boden des Kofferraumes hinter den Rücksitzen befestigt sein. Bevorzugt kann er gleichzeitig in den Zugmechanismus für das/die Zugseil(e) integriert sein.

Es können auch mit einem Gasgenerator verbundene Riegel nach Auslösung des Gasgenerators in entsprechend der Form der Riegel ausgebildete Aufnahmen eingreifen und die Rückenlehnenteile in der Sitzstellung arretieren. Dabei kann entweder der Gasgenerator oder der Riegel am Rückenlehnenteil befestigt sein oder in eine dort vorhandene Aufnahme eingreifen und das jeweils andere Teil am Fahrzeugchassis befestigt sein oder dort in eine Aufnahme eingreifen.

Zusätzlich kann mindestens ein Lage- oder Positionssensor an den Rückenlehnenteilen angeordnet sein, der eine Auslösung der Zusatzarretierung verhindert, wenn sich eines der beiden benachbarten Rückenlehnenteile nicht in hochgeklappter Stellung, d.h. in Sitzposition, befindet. Dieser Sensor kann den die Beschleunigung erfassenden Sensor, den Gasgenerator und ggf. den Betätigungsmechanismus für die Zusatzarretierung oder diese selbst sperren, wenn mindestens eines der beiden benachbarten Rückenlehnenteile irgendwie geklappt ist, die Rückenlehnenteile nicht in hochgestellter Stellung parallel nebeneinander ausgerichtet sind.

Nachfolgend soll die Erfindung an einem Ausführungsbeispiel näher beschrieben werden. Dabei zeigt:
- Fig. 1:: ein Rückenlehnenteil eines Kraftfahrzeugrücksitzes mit einem Gasgenerator zur Auslösung einer Zusatzarretierung;
- Fig. 2:: ein Rückerlehnenteil eines Kraftfahrzeugrücksitzes mit Zusatzarretierung in Verriegelungsstellung;
- Fig. 3:: ein Beispiel einer Zusatzarretierung unter Verwendung von an den Rückeniehnenteilen befestigten Zugseilen in nicht gespanntem Zustand;
- Fig. 4:: das Beispiel einer Zusatzarretierung nach Fig. 3 in gespanntem Zustand der Zugseile;
- Fig. 5:: ein Beispiel einer Zusatzarretierung unter Verwendung von Sperrelementen, die in Aufnahmen am Fahrzeugboden eingreifen, in nichtarretiertem Zustand;
- Fig. 6:: das Beispiel einer Zusatzarretierung nach Fig. 5 in arretiertem Zustand;
- Fig. 7:: ein weiteres Ausführungsbeispiel für eine Zusatzarretierung;
- Fig. 8:: ein Ausführungsbeispiel für eine Sensoreinrichtung;
- Fig. 9:: das in Fig. 7 dargestellte Ausführungsbeispiel einer Zusatzarretierung in Ruheposition;
- Fig. 10:: das in Fig. 9 dargestellte Ausführungsbeispiel der Zusatzarretierung in seiner verriegelten Position.

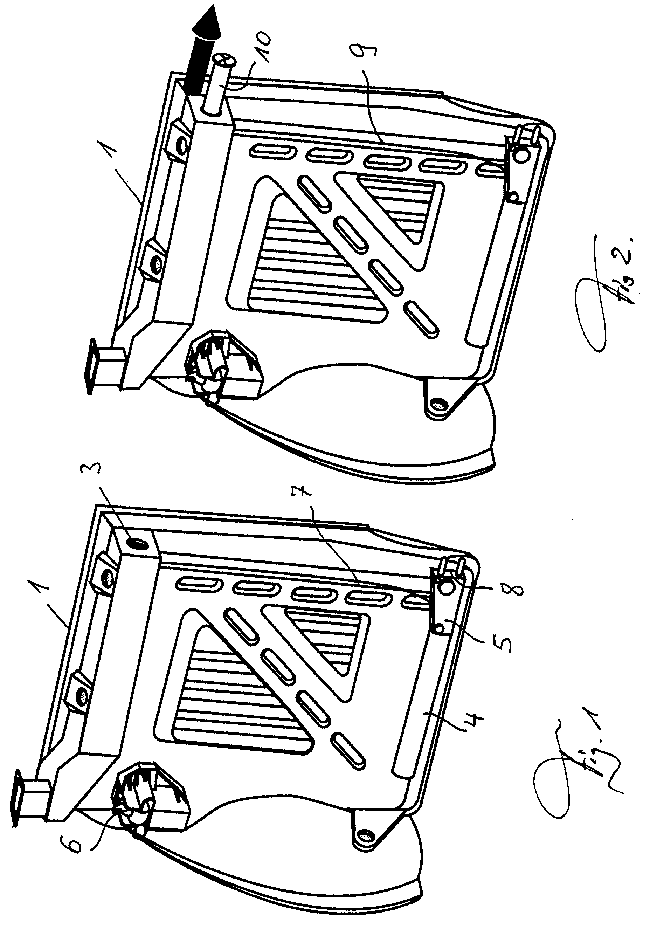

Das in der Fig. 1 dargestellte Rückenlehnenteil 1 eines geteilt klappbaren Kraftfahrzeugrücksitzes ist über mindestens ein seitlich angeordnetes Gelenk 2 Klappbar und kann in verschiedene Stellungen geklappt werden. Für den Halt des Rückenlehnenteils 1 in der Sitzposition, also in hochgeklappter Stellung, ist eine seitliche Arretierung 6 vorhanden, die in die tragenden Teile der Fahrgastzelle, beispielsweise die C-Säule oder den Fahrzeugboden eingreift. Auf der hierzu gegenüberliegenden Seite des Rückenlehnenteils 1 ist eine Zusatzarretierung 3 vorhanden, die sich in dieser Darstellung in Bereitschaftsstellung befindet.

Zur Auslösung der Zusatzarretierung 3 ist quer zur Fahrtrichtung im bzw. entlang des Rahmens des Rückenlehnenteiles 1 als Kraftspeicher ein Gasgenerator 4 mit einem Beschleunigungssensor 5 zu dessen Auslösung bei Überschreiten eines in Fahrtrichtung ermittelten Beschleunigungsgrenzwertes angebracht. Bei diesem Beispiel wird der Druck des mit dem Gasgenerator 4 erzeugten Gases ausgenutzt, um eine Zugeinrichtung 7 zu betätigen, die auf die Zusatzarretierung 3 wirkt und diese in Verriegelungsstellung bringt, so daß ein Verbund zwischen den beiden Rückenlehnenteilen 1 hergestellt wird.

Der Fig. 1 ist weiter ein Positionssensor 8 an mindestens einem der beiden benachbarten Rückenlehnenteile 1 angeordnet, der ein Sperrsignal für die Zusatzarretierung 3 ausgibt, wenn sich die beiden benachbarten Rückenlehnenteile 1 nicht parallel zueinander in Sitzposition befinden. Das Sperrsignal kann bevorzugt den Beschleunigungssensor 5 oder den Gasgenerator 4 sperren.

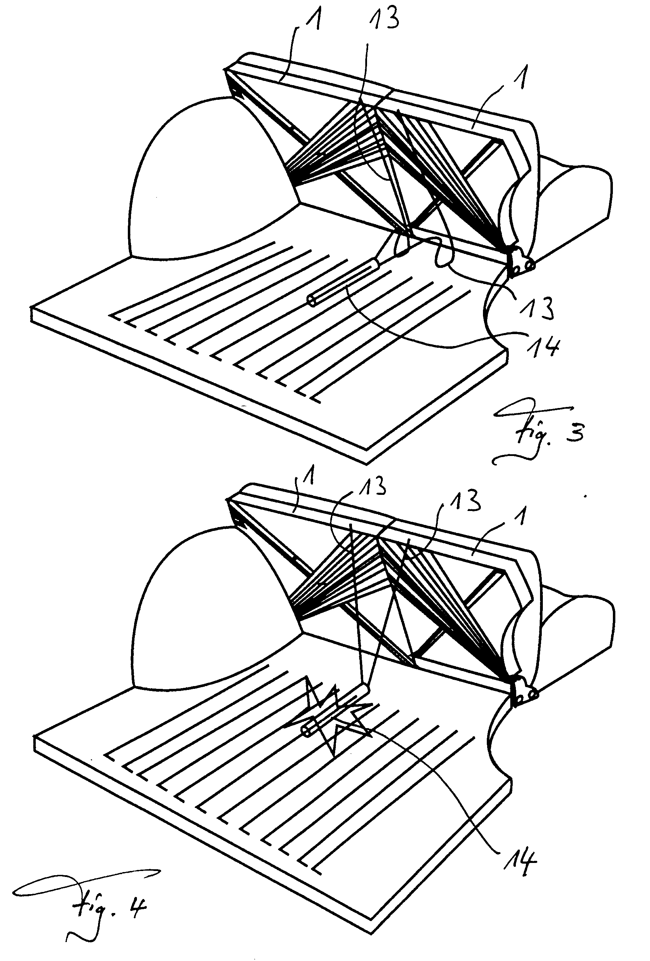

Die Ausführungsform, die in der Fig. 2 dargestellt ist, unterscheidet sich durch eine Druckleitung 9, die an Stelle der Zugeinrichtung 7 den Gasdruck zu einem nicht dargestellten Betätigungszylinder leitet, in dem ein Arbeitskolben auf den Riegelbolzen 10, der Zusatzarretierung 3 wirkt. Der Betätigungszylinder ist hierbei im Rahmen des Rückenlehnenteiles 1 in Richtung, die mit dem Pfeil 11 gekennzeichnet ist, ausgerichtet. Der Riegelbolzen 10 verfügt über eine Rastnase, die die Verbindungssicherheit der Zusatzarretierung 3 und damit die die Rückenlehnenteile 1 haltenden Kräfte erhöht. In den übrigen Teilen ist dieses Beispiel wie das Beispiel nach der Fig. 1 ausgeführt, für das ebenfalls der Riegelbolzen 10 verwendet werden kann. Im Crashfall wird durch den als aktiver Sperriegel wirkenden Riegelbolzen 10 ein Verbund zwischen den Rückenlehnenteilen hergestellt.

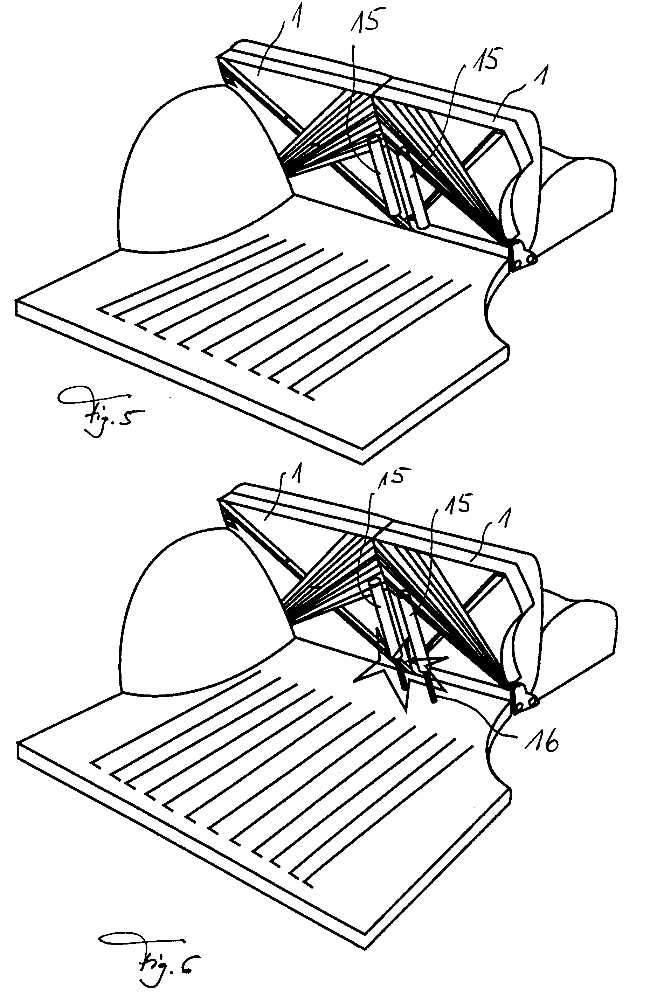

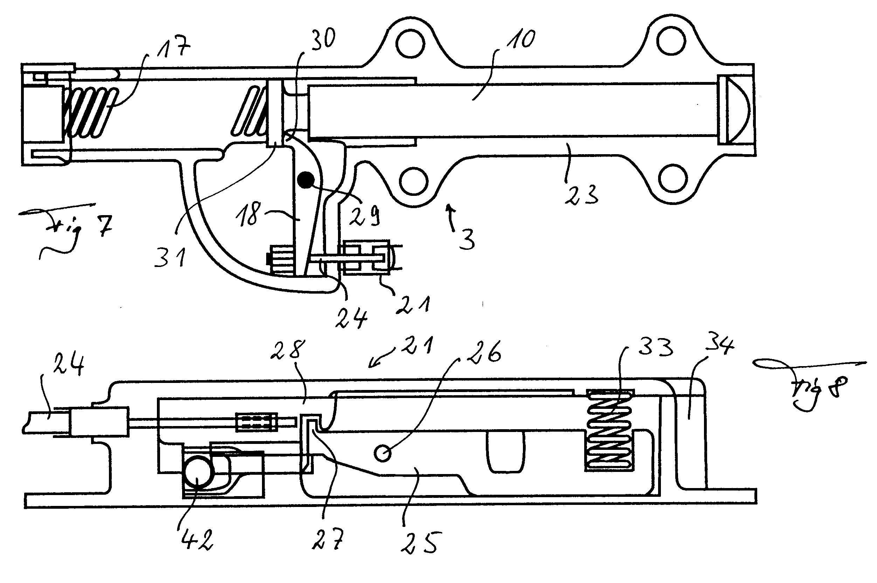

Das in den Figuren 3 und 4 dargestellte Ausführungsbeispiel verwendet je Rückenlehnenteil 1 mindestens ein Zugseil 13, das mit dem oberen Rückenlehnenbereich verbunden ist und im Normalfall lose zu einer mechanischen Zugeinrichtung 14, in die ein Gasgenerator als Kraftspeicher integriert ist, geführt ist (Fig. 3). Die beiden Zugseile 13 für die jeweiligen Rückenlehnenteile 1 haben eine freie Länge, die ein Umklappen der Rückenlehnenteile 1 im gewünschten Maß ohne Behinderung ermöglicht.

In der Fig. 4 sind die Zugseile 13 von der Zugeinrichtung 14 gespannt und werden straff gehalten, so daß die Rückenlehnenteile 1 zusätzlich an einer Bewegung in Fahrtrichtung gehindert sind. Im übrigen kann die Auslösung des Gasgenerators bzw. der Zugeinrichtung 14 mit einem Sensor erfolgen, wie dies beim Beispiel, das in den Figuren 1 und 2 beschrieben wurde, der Fall ist.

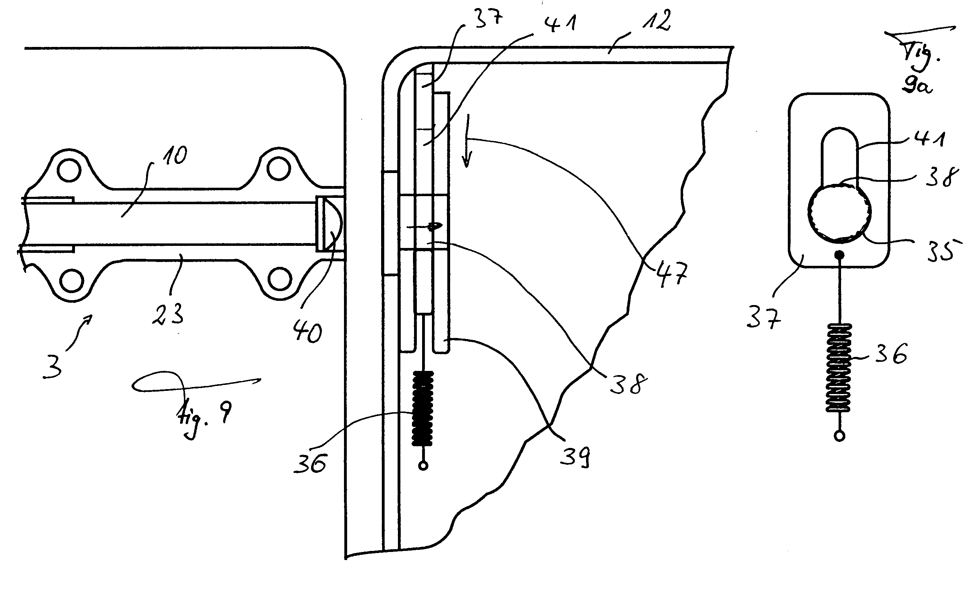

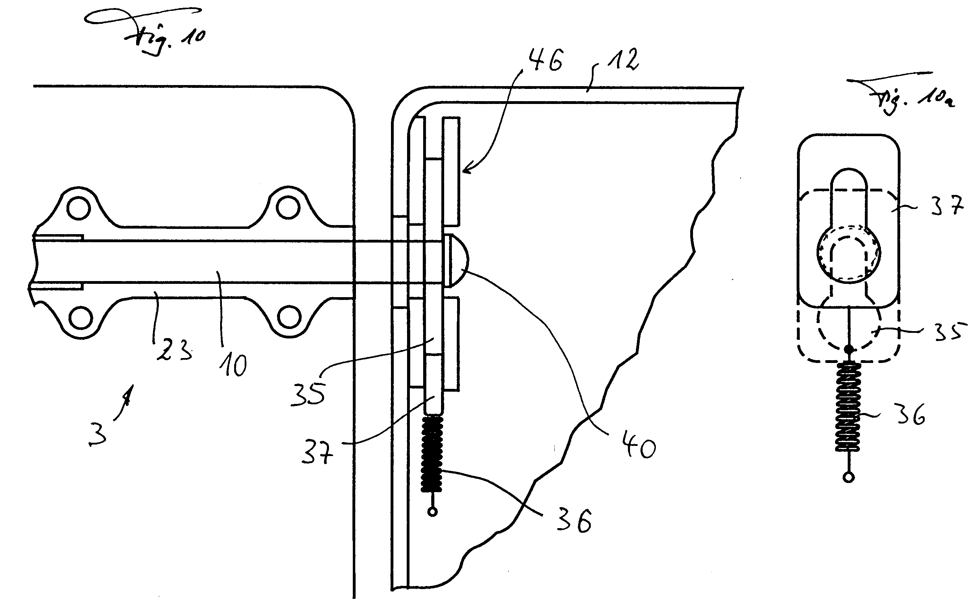

In gleicher Weise kann auch die Auslösung bei einem weiteren Beispiel einer Zusatzarretierung erfolgen, die in den Figuren 5 und 6 dargestellt ist.

Dabei sind je Rückenlehnenteil 1 eine Schubeinrichtung 15 an diesem befestigt, bei der auch ein integrierter Gasgenerator vorgesehen sein kann. In der Schubeinrichtung 15 sind lediglich in der Fig. 6 erkennbare Riegel 16 aufgenommen, die nach Auslösung von Schubeinrichtung 15 bzw. Gasgenerator in Richtung auf im Fahrzeugchassis vorhandene Aufnahmen bewegt werden und ein Kippen bzw. Uniklappen auch bei größerer Belastung verhindern, in dem Schubeinrichtung 15 und den in die Aufnahme greifenden Riegel 16, die Zusatzarretierung bilden.

Bei diesem Beispiel sind die Aufnahmen für die Riegel 16 im Fahrzeugboden hinter den Rückenlehnenteilen 1 angeordnet, sie können aber auch an anderen geeigneten Teilen des Fahrzeugchassis vorgesehen sein.

Auch eine Umkehr der Schubrichtung und Anordnung der Aufnahmen ist möglich, wenn sich die Schubeinrichtung 15 am Fahrzeugchassis und die Aufnahmen an den Rückenlehnenteilen 1 befinden.

Die in der Fig. 7 dargestellte Ausführungsform der Zusatzarretierung 3 besitzt den Riegelbolzen 10. Der Riegelbolzen 10 ist in seiner axialen Richtung verschiebbar in einer der beiden Rückenlehnen untergebracht. Wie die beiden Figuren 9 und 10 zeigen, kann die Zusatzarretierung 3 in der 40%-Rückenlehne 1 des Kraftfahrzeugrücksitzes untergebracht sein. Der Riegelbolzen 10 ist hierzu in einer Längsführung 23 in axialer Richtung geführt.

In der in den Figuren 7 und 9 dargestellten Ruheposition wird der Riegelbolzen 10 durch eine Sperre 18, welche als Sperrhebel ausgebildet ist, gehalten. Die Sperre 18 greift mit einem Eingriffsteil 30 an einen Anschlag 31, der an den Riegelbolzen 10 angeformt ist, an. In der Ruheposition wird der Riegelbolzen 10 gegen die Kraft einer Feder 17 gehalten. Die Feder 17 wirkt als Kraftspeicher und spannt den Riegelbolzen 10 in Richtung seiner Verriegelungsposition, die in Fig. 10 gezeigt ist, vor.

Die als Sperrhebel ausgebildete Sperre 18 ist über einen Bowdenzug 24 mit einem Beschleunigungssensor 21, welcher in Fig. 8 im einzelnen dargestellt ist, verbunden.

Der Beschleunigungssensor 21 besitzt einen Sensorhebel 25. Der Sensorhebel 25 ist als zweiseitiger Hebel ausgebildet, der um eine Achse 26 schwenkbar ist. Am einen Hebelarm ist ein Eingriffsteil 27 vorgesehen, welches in sperrenden Eingriff mit einem mit dem Bowdenzug 24 verbundenen Sensorriegel 28 in Ruheposition steht. Dieser Zustand ist in der Fig. 8 dargestellt. Durch den sperrenden Eingriff des Sensorhebels 25 in den Sensorriegel 28 werden die als Sperrhebel 18 ausgebildete Sperre und der Riegelbolzen 10 gegen die Kraft der Feder 17 in der Ruheposition gehalten. Die Kraft der Feder 17 übt dabei über den um eine Achse 29 schwenkbaren Sperrhebel der Sperre 18 und den Bowdenzug 24 eine Kraft an der Eingriffsstelle zwischen dem Sensorriegel 28 und dem Eingriffsteil 27 des Sensorhebels 25 in Richtung des Bowdenzuges aus. Auch der Sperrhebel der Sperre 18 ist als zweiarmiger Hebel ausgebildet, wobei am einen Hebelarm der Bowdenzug 24 angreift und am anderen Hebelarm das Eingriffsteil 30 vorgesehen ist, das am Anschlagteil 31, welches an den Riegelbolzen 10 angeformt ist, in der dargestellten Ruheposition anliegt.

Am zweiten Hebelarm des Sensorhebels 25 ist eine Sensormasse 32 vorgesehen. Die Sensormasse 32 des zweiten Hebelarms stützt sich über eine Sensorfeder 33 an einem ortsfesten Sensorgehäuse 34 ab. Der Sensorhebel 25 ist so angeordnet, daß seine Längsausdehnung quer zur Fahrzeuglängsrichtung verläuft. Er kann in horizontaler Richtung an dem Rückenlehnenteil 1 vorgesehen sein. Ferner ist eine Sensorsperre 42 vorgesehen, die ein Lösen des Eingriffs des Sensorhebels 25 in den Sensorriegel 28 z.B. beim Transport und während der Montagearbeiten verhindert. Nach der Endmontage ist diese Sperre gelöst.

Bei überhöhter Beschleunigung oder Abbremsung spricht der Beschleunigungssensor 21 an. Hierbei wird die Sensormasse 32 gegen die Kraft der Sensorfeder 33 um die Achse 26 geschwenkt. Das am anderen Hebelarm vorgesehene Eingriffsteil 27 wird außer Eingriff mit dem Sensorriegel 28 um die Achse 26 dabei geschwenkt. Damit ist die Sperre 18 gelöst und die Kraft der Feder 17 freigegeben. Aufgrund der Kraft der Feder 17 wird der Riegelbolzen 10 in den Figuren 7 und 9 nach rechts in seiner Längsführung 23 verschoben. Dabei wird der Sperrhebel der Sperre 18 um die Achse 29 verschwenkt, so daß das Eingriffsteil 30 außer Eingriff mit dem Anschlag 31 kommt. Der Riegelbolzen 10 besitzt an seinem vorderen Ende einen Riegelkopf 40. Dieser bewegt sich durch eine Aufrahmeöffnung 35 eines von einer Verriegelungsfeder 36 vorgespannten Verriegelungselements 37 in Form einer Verriegelungsplatine. In der in der Fig. 9 dargestellten Ruheposition wird das Verriegelungselement 37 durch einen in der Aufnahmeöffnung 35 angeordneten Haltebolzen 38 in der vorgespannten Ruhestellung gehalten. Der Haltebolzen 38 ragt durch entsprechende Öffnungen in einer Führung 39, beispielsweise in Form von zwei Führungsplatinen, zwischen denen das Verriegelungselement 37 geführt wird. Durch den Haltebolzen wird das Verriegelungselement 37 in der in der Fig. 9 dargestellten Ruheposition zwischen den beiden Platinen der Führungseinrichtung 39 gehalten.

Die Aufnahmeöffnung 35 ist so gestaltet, daß der Riegelkopf 40 an der Spitze des Riegelbolzens 10 beim Antrieb durch die Feder 17 durch die Aufnahmeöffnung 35 hindurch bewegt wird, wobei der Haltebolzen 38 aus seiner Halteposition herausgedrängt wird. Der Riegelbolzen 10 und der Riegelkopf 40 nehmen dann die in Fig. 10 dargestellte Position ein. Die Führungseinrichtung 39, in deren beiden Platinen ebenfalls die Aufnahmeöffnung 35 vorgesehen ist, bildet eine Aufnahme für den Riegelbolzen 10. Die Führungseinrichtung 39, welche zusammen mit dem platinenförmigen Verriegelungselement eine Aufnahme 46 für den Riegelbolzen 10 in seiner Verriegelungsposition bildet, befindet sich im anderen Rückenlehnenteil 12. Beim dargestellten Ausführungsbeispiel ist dieses Rückenlehnenteil 12 als 60%-Rückenlehnenteil der Fahrzeugrückbank ausgebildet.

Das in der Führungseinheit 39 verschiebbar gelagerte Verriegelungselement 37 wird aufgrund der Kraft der Verriegelungsfeder 36 nach unten (Pfeil 47) gezogen, nachdem der Haltebolzen 38 aus seiner Halteposition entfernt ist. Das platinenförmige Verriegelungselement 37 besitzt hierzu anschließend an die Aufnahmeöffnung 35 ein verengtes Langloch 41, dessen Breite geringer bemessen ist als der Durchmesser des Riegelkopfes 40. Die Breite des Langloches 41 ist so bemessen, daß der an den Riegelkopf 40 sich anschließende Teil des Riegelbolzens 10 unbehindert hindurchragen kann, wie das in Fig. 10 dargestellt ist. Man erhält hierdurch eine vorgefederte Zwangsverriegelung des Riegelbolzens 10 im anderen Rückenlehnenteil 12. Durch den zwangsverriegelten Riegelbolzen 10 wird ein formschlüssiger Zugverbund zwischen den beiden Hinterrückenteilen 1 und 12 erreicht. Dieser formschlüssige Zugverbund gewährleistet einen Schutz gegen Schubkräfte, welche aufgrund von bewegter Ladung, die hinter der Rückbank im Fahrzeug angeordnet ist, entstehen.

Der formschlüssige Zugverbund mit vorgefederter Zwangsverriegelung wird bei dem in den Figuren 7 bis 10 dargestellten Ausführungsbeispielen dadurch gebildet, daß der Riegelbolzen 10 im einen Hinterrückenteil 1 geführt ist und durch die Kraft der als Kraftspeicher wirkenden Feder 17 in Richtung auf eine Bolzenaufnahme 46 im anderen Hinterrückenteil 12 bewegt wird. Die Bolzenaufnahme 46 enthält die vorgefederte Zwangsverriegelung in Form der Führungseinrichtung 39 mit dem unter der Federlast stehenden Verriegelungselement 37.

## Patentansprüche

1. Vorrichtung zum Verriegeln von geteilt klappbaren und mittels zugeordneter Arretierungen (6) am Fahrzeugaufbau in Normalposition gehaltener Rückenlehnen an Kraftfahrzeugrücksitzen, wobei mindestens eine durch einen Beschleunigungssensor (5; 21) auslösbare Zusatzarretierung (3; 10; 13; 16), welche an zwei Rückenlehnenteilen (1, 12) wirkt, vorgesehen ist, **dadurch gekennzeichnet**, daß der Beschleunigungssensor (5; 21) einen Kraftspeicher (4; 17) freigibt, der die Zusatzarretierung (3; 10; 13; 16) betätigt.

2. Vorrichtung nach Anspruch 1, **dadurch gekennzeichnet**, daß mindestens ein weiterer Sensor (8) zur Erfassung der Stellung der Rückenlehnenteile (1) an der Rückenlehne angeordnet ist.

3. Vorrichtung nach Anspruch 1 oder 2, **dadurch gekennzeichnet**, daß durch die Zusatzarretierung (3; 10) ein Verbund zwischen zwei Rückenlehnenteilen (1, 12) gebildet ist.

4. Vorrichtung nach einem der Ansprüche 1 bis 3, **dadurch gekennzeichnet**, daß mindestens die Zusatzarretierung einen mittels einer Schubeinrichtung (15; 17) bewegbaren Riegel (10; 16) aufweist.

5. Vorrichtung nach Anspruch 4, **dadurch gekennzeichnet**, daß der jeweilige Riegel (10; 16) nach Auslösung der Schubeinrichtung (15; 17) formschlüssig in eine Aufnahme eingreift.

6. Vorrichtung nach einem der Ansprüche 1 bis 5, **dadurch gekennzeichnet**, daß das/die Sperrelement(e) als aktive(r) Sperriegel ausgebildet ist/sind.

7. Vorrichtung nach einem der Ansprüche 1 bis 6, **dadurch gekennzeichnet**, daß die ausgelöste Zusatzarretierung (3; 10; 16) zwangsverriegelt ist.

8. Vorrichtung nach einem der Ansprüche 1 bis 7, **dadurch gekennzeichnet**, daß die Zusatzarretierung einen durch eine Feder (17) vorgespannten Riegelbolzen (10) aufweist, der durch eine vom Beschleunigungssensor (5) lösbare Sperre (18) in Ruheposition gehalten ist.

9. Vorrichtung nach einem der Ansprüche 1 bis 8, **dadurch gekennzeichnet**, daß die Zusatzarretierung gegen eine Rückstellkraft in Richtung Verriegelungsposition bewegbar ist.

10. Vorrichtung' nach einem der Ansprüche 1 bis 9, **dadurch gekennzeichnet**, daß der Riegel (10) in einem Rückenlehnenteil (1) und eine Aufnahme (46) für den Riegel in seiner Verriegelungsposition im anderen Rückenlehnenteil (12) vorgesehen sind.

11. Vorrichtung nach einem der Ansprüche 1 bis 10, **dadurch gekennzeichnet**, daß der Riegel (10) in eine Verriegelungsbereitschaft bewegbar ist.

## Claims

1. Device for locking backrests on motor vehicle seats, which are foldable separately and held in the normal position on the vehicle body by means of associated locking means (6), wherein at least one additional locking means (3; 10; 13; 16) is provided, which can be triggered by an acceleration sensor (5; 21) and which acts on two backrest portions (1, 12), characterised in that the acceleration sensor (5; 21) releases an energy storing device (4; 17) which actuates the additional locking means (3; 10; 13; 16).

2. Device according to claim 1, characterised in that at least one additional sensor (8) for detecting the position of the backrest portions (1) is arranged on the backrest.

3. Device according to claim 1 or 2, characterised in that by the additional locking means (3; 10) is formed a bond between two backrest portions (1, 12).

4. Device according to any of claims 1 to 3, characterised in that at least the additional locking means comprises a bolt (10; 16) movable by means of a shift device (15; 17).

5. Device according to claim 4, characterised in that the respective bolt (10; 16) after triggering of the shift device (15; 17) engages in form-locking relationship in a receptacle.

6. Device according to any of claims 1 to 5, characterised in that the locking element(s) is/are constructed as an operative locking bolt.

7. Device according to any of claims 1 to 6, characterised in that the triggered additional locking means (3; 10; 16) is forcibly locked.

8. Device according to any of claims 1 to 7, characterised in that the additional locking means comprises a bolt (10) which is biased by a spring (17) and which is held in the rest position by a catch (18) releasable by the acceleration sensor (5).

9. Device according to any of claims 1 to 8, characterised in that the additional locking means is movable against a return force in the direction of the locking position.

10. Device according to any of claims 1 to 9, characterised in that the bolt (10) is provided in one backrest portion (1) and a receptacle (46) for the bolt in its locking position is provided in the other backrest portion (12).

11. Device according to any of claims 1 to 10, characterised in that the bolt (10) is movable into a standby state for locking.

## Revendications

1. Dispositif de verrouillage de dossiers divisibles rabattables de sièges arrières de véhicules automobiles qui sont tenus dans la positon normale sur la structure de véhicule, a l'aide de dispositifs d'arrêt associés, au moins un dispositif d'arrêt supplémentaire (3; 10; 13; 16) qui peut être déclenché par un capteur d'accélération (5; 21) et agit sur deux parties de dossier (1, 12) étant prévu, caractérisé par le fait que le capteur d'accélération (5; 21) libère un accumulateur de force (4; 17) qui actionne le dispositif d'arrêt supplémentaire (3; 10; 13; 16).

2. Dispositif selon la revendication 1, caractérisé par le fait qu'au moins un capteur supplémentaire (8) pour détecter la position des parties de dossier (1) est disposé sur le dossier.

3. Dispositif selon la revendication 1 ou 2, caractérisé par le fait que le dispositif d'arrêt supplémentaire (3; 10) forme un lien entre deux parties de dossier.

4. Dispositif selon une des revendications 1 à 3, caractérisé par le fait qu'au moins le dispositif d'arrêt supplémentaire comporte un verrou (10; 16) qui peut être déplacé par un dispositif de poussée (15; 17).

5. Dispositif selon la revendication 4, caractérisé par le fait que le verrou (10; 16) concerné, après déclenchement du dispositif de poussée (15; 17), pénètre par complémentarité de formes dans un logement.

6. Dispositif selon une des revendications 1 à 5, caractérisé par le fait que l'/les élément(s) de blocage est/sont agencé(s) sous forme de verrou(s) actif(s).

7. Dispositif selon une des revendications 1 à 6, caractérisé par le fait que le dispositif d'arrêt supplémentaire (3; 10; 16) déclenché est verrouillé par force.

8. Dispositif selon une des revendications 1 à 7, caractérisé par le fait que le dispositif d'arrêt supplémentaire comporte une tige de verrou (10) précontrainte par un ressort (17), qui est maintenue dans la position de repos par un dispositif de retenue (18) déclenchable par le capteur d'accélération (5).

9. Dispositif selon une des revendications 1 à 8, caractérisé par le fait que le dispositif d'arrêt supplémentaire peut être déplacé en direction de la position de verrouillage à l'encontre d'une force de rappel.

10. Dispositif selon une des revendications 1 à 9, caractérisé par le fait que le verrou (10) est prévu dans une partie de dossier (1) et qu'un logement (46) pour le verrou, dans la position de verrouillage de celui-ci est prévu dans l'autre partie de dossier (12).

11. Dispositif selon une des revendications 1 à 10, caractérisé par le fait que le verrou (10) peut être déplacé dans une position d'attente de verrouillage.
